# EUROPEAN PATENT APPLICATION

(11) **EP 4 261 684 A1**
(43) Date of publication of application: **18.10.2023**
(21) Application number: 22174431.1
(22) Date of filing: 19.05.2022
(51) Int. Cl.: G06F 9/50, G06F 9/54, G06T 1/20

(54) **A MULTI-CORE PROCESSOR SYSTEM AND A COMPUTER-IMPLEMENTED METHOD FOR IMAGE PROCESSING**

(30) Priority: 14.04.2022 EP 22168504
(71) Applicant: Leica Microsystems CMS GmbH, 35578 Wetzlar (DE)
(72) Inventor: Walter, Kai, 35578 Wetzlar (DE); Friedrich, Lars, 35578 Wetzlar (DE); Ziesche, Florian, 35578 Wetzlar (DE)
(74) Representative: Grünecker Patent- und Rechtsanwälte PartG mbB

(57) **Abstract**

A computer-implemented method for image processing on a multi-core processor system (100), the computer-implemented method comprising steps of: distributing a kernel (116) to a plurality of stream processors for concurrently executing a plurality of threads of the kernel by each stream processor (102a, 102b, 102c, 102d), the kernel defining processing steps of an image processing routine in an iterative manner; while each thread of the kernel is concurrently executed by each stream processor, iteratively performing the processing steps defined within the kernel that was distributed to each of the stream processor, wherein each stream processor has a shared memory (104a, 104b, 104c, 104d) locally accessible within the stream processor, and wherein a first global buffer (106a) of the multi-core processor system and a second global buffer (106b) of the multi-core processor system is each accessible to the plurality of stream processors, the processing steps of the image processing routine comprising: (i) computing a forward transform of intermediary input image data to obtain forward transformed data, wherein a first global buffer provides the intermediary input image data, and wherein a shared memory receives the forward transformed data resulting from the forward transform; (ii) processing the forward transformed data to obtain processed data, wherein the shared memory receives the processed data; (iii) computing a backward transform of the processed data to obtain backward transformed data, wherein a second global buffer receives the backward transformed data; and (iv) before the first global buffer provides intermediary input image data, synchronizing the first global buffer between the plurality of stream processors.

## Description

### Technical field

The present invention relates to a multi-core processor system, a computer-implemented method for image processing on a multi-core processor system, a corresponding computer program, and a corresponding computer-readable medium comprising instructions for image processing on a multi-core processor system.

### Background

Signal processing concerns the computation of data from one dimensional signal. Image processing is related to signal processing and concerns computations of data for two dimensional data, such as a digital image.

In any case, both types of processing concern computationally intensive tasks. The computational tasks require a lot of memory resources and computing resources. Image processing may also be extended to processing three-dimensional data when multiple layers of an image are available. For example, when each layer concerns a different color channel and/or a different focal point. Alternatively, the multiple layers of the image may represent different focal depths when the images were recorded.

### Summary

Hence, there is a need for an improved multi-core processor system for image processing, a corresponding computer-implemented method for image processing, a corresponding computer program, a corresponding computer-readable medium comprising instructions for image processing on a multi-core processor system. According to an embodiment latencies of the computational tasks are reduced by processing the tasks more efficiently.

This summary is provided to introduce a selection of concepts in a simplified form that are further described below in the Detailed Description section. This summary is not intended to identify key features or essential features of the claimed subject matter, nor is it intended to be used as an aid in determining the scope of the claimed subject matter.

According to an embodiment, a multi-core processor system for image processing is provided.

The multi-core processor system comprises a plurality of stream processors. Each stream processor has a shared memory that is locally accessible within the stream processor. The multi-core processor system further includes a first global buffer and a second global buffer, wherein each global buffer is accessible to the plurality of stream processors. The multi-core processor system is further configured to distribute a kernel to the plurality of stream processors for concurrently executing a plurality of threads of the kernel by each stream processor. The kernel may represent a compute kernel. The kernel defines processing steps of an image processing routine in an iterative manner. An initial input image may be provided to the image processing routine as input data. Thus, the kernel may define an image processing routine for an initial input image in an iterative manner. Likewise, the kernel may alternatively or generally define processing steps of a signal processing routine in an iterative manner for input data. The processing steps may define computational tasks that are related to processing the initial input image or input data.

The multi-core processor system is further configured to iteratively perform the processing steps defined within the kernel that was distributed to each of the stream while each thread of the kernel is concurrently executed.

The processing steps of the image processing routine defined within the kernel comprise: (i) computing a forward transform of intermediary input image data to obtain forward transformed data , wherein the first global buffer is configured to provide the intermediary input image data, and wherein the shared memory is configured to receive the forward transformed data resulting from the forward transform; (ii) processing the forward transformed data to obtain processed data, wherein the shared memory is configured to receive the processed data; (iii) computing a backward transform of the processed data to obtain backward transformed data, wherein the second global buffer is configured to receive the backward transformed data; and (iv) before the first global buffer provides the intermediary input image data, synchronizing the first global buffer between the plurality of stream processors.

According to another embodiment, the intermediary input image data is derived from the initial input image. The intermediary input image data may be obtained by processing the initial input image. The initial input image itself may be received from a host. The initial input image may represent an image or image data that is to be processed according to the image processing routine. In other words, the initial input image may represent the input data for the image processing routine or signal processing routine defined by the kernel.

According to another embodiment, the processing steps may further comprise: pre-processing the initial input image to obtain the intermediary input image data, wherein the shared memory is configured to provide the initial input image, and wherein the first global buffer is configured to receive the intermediary input image data.

According to another embodiment, the processing steps may further comprise: in response to the computing of the backward transform, synchronizing the second global buffer between the plurality of stream processors; and computing a per-iteration update of the backward transformed data to obtain an updated initial input image, wherein the shared memory is configured to receive the updated initial input image, and wherein the second global buffer is configured to provide the backward transformed data. Thus, the updated initial input image may represent the initial input image for a next or subsequent iteration of the image processing routine defined by the kernel. As the intermediary input image data may be obtained from the initial input image, intermediary input image data of a next iteration may be obtained by processing the updated initial input image in an analogous manner as the initial input image data of an initial iteration.

According to another embodiment, the multi-core processor system may be configured to alternate accessing modes of the global buffers with every iteration step of the processing steps defined in the kernel. Typical accessing modes comprise a read-mode, such as an exclusive read access, and a write-mode, such as, an exclusive write access. Alternating the accessing modes to the global buffers may reduce latencies of the computations involved in the processing steps. In other words, the multi-core processor system may be configured to provide exclusive read access and exclusive write access to the first global buffer and the second global buffer in an alternating manner. For example, during a first iteration of a plurality of iterations defined in the kernel, the first global buffer may be used for receiving data only, such as the intermediary input image data, and the second global buffer may be used for providing data only, such as backward transformed data. In an iteration subsequent to the first iteration, roles of the first global buffer and second global buffer may alternate or may be exchanged. Then, the second global buffer may be configured to provide data and the first global buffer may be configured to receive data. In a further subsequent iteration, the second global buffer may be configured to receive data and the first global buffer may be configured to provide data. The multi-core processor system may further be configured to call a global device synchronization in preparation to alternating the accessing modes of the global buffers.

According to another embodiment, the multi-core processor system is configured to alternate writing a result of a processing step between the first global buffer and the second global buffer. In other words, when the first global buffer receives data in a current iteration of the kernel, in the subsequent iteration the first global buffer provides data. Conversely, the second global buffer which provides data in the current iteration of the kernel, will receive data in the subsequent iteration. The global buffers may swap or alternate the accessing modes with every subsequent iteration of the processing steps defined in the kernel.

According to another embodiment, the first global buffer and second global buffer may be used in an alternating manner as a source and destination for the processing steps defined by the kernel. Whenever, the accessing mode to a buffer, such as the first global buffer or the second global buffer, will change from writing to reading, a global device synchronization may be performed prior to reading data from the buffer.

According to another embodiment, the pre-processing comprises computing the forward transform along a first image dimension of the initial input image. The forward transform of the intermediary input image data may be computed along a second image dimension of the initial input image, the second image dimension being different from the first image dimension.

According to another embodiment, the processing steps of the image processing routine for an initial input image represent a portion of at least one of the following: performing a Richardson-Lucy deconvolution associated with the initial input image; performing a deconvolution operation associated with the initial input image; determining a point spread function associated with the initial input image; de-blurring the initial input image; and blurring the initial input image.

According to another embodiment, at least one of the computing of the forward transform, the processing of the forward transformed data, and the computing of the backward transform represent a linear image processing operation. Examples of linear image processing operations are convolution, Sobel filter, addition, etc.

According to another embodiment, at least one of the computing of the forward transform, the processing of the forward transformed data, and the computing of the backward transform represent a non-linear image processing operation. Examples of non-linear image processing operations are filtering operations, such as a median filter for noise reduction in a filtering region. Also single-pixel based non-linear operations may be represented by at least one of the computing of the forward transform, the processing of the forward transformed data, and the computing of the backward transform. An example for such single-pixel based non-linear operation is thresholding.

According to another embodiment, the linear image processing operation comprises a convolution of the initial input image with a convolution kernel, or a linear filtering operation of the initial input image.

According to another embodiment, the forward transform may comprise a Fast Fourier Transform, and the backward transform may be an inverse function to the forward transform. Alternatively, the forward transform may comprise a wavelet transform, a Laplace transform, a Hankel transform, a Haar transform, a Radon transform, a discrete cosine transform, a Hough transform and/or any other transform with a corresponding inverse function. The backward transform may comprise the corresponding inverse function to the forward transform.

According to another embodiment, the kernel that is distributed to the plurality of stream processors may represent a cooperative kernel. Threads or thread blocks of the cooperative kernel may cooperate and synchronize as the threads or respectively thread blocks execute concurrently.

According to another embodiment, the multi-core processor system is further configured to: receive the kernel defining the processing steps of the image processing routine from a host, and synchronize the first global buffer without providing data from the first global buffer to the host. The host may be a computer or a digital workstation. The host may also provide the initial input image to the multi-core processor system.

According to another embodiment, the multi-core processor system is further configured to: partition the plurality of stream processors into at least two groups with an equal group size, and the group size being larger than 1. The groups may represent cooperative groups. Stream processors within the same group may share or concurrently access data in the global buffer of the multi-core processor system.

According to an embodiment, a computer-implemented method for image processing on a multi-core processor system is provided. The computer-implemented method comprises the steps of: distributing a kernel to a plurality of stream processors for concurrently executing a plurality of threads of the kernel by each stream processor, the kernel defining processing steps of an image processing routine in an iterative manner; while each thread of the kernel is concurrently executed by each stream processor, iteratively performing the processing steps defined within the kernel that was distributed to each of the stream processor, wherein each stream processor has a shared memory locally accessible within the stream processor, and wherein a first global buffer of the multi-core processor system and a second global buffer of the multi-core processor system is each accessible to the plurality of stream processors. The processing steps of the image processing routine may comprise: (i) computing a forward transform of intermediary input image data to obtain forward transformed data, wherein a first global buffer provides the intermediary input image data, and wherein a shared memory receives the forward transformed data resulting from the forward transform; (ii) processing the forward transformed data to obtain processed data, wherein the shared memory receives the processed data; (iii) computing a backward transform of the processed data to obtain backward transformed data, wherein a second global buffer receives the backward transformed data; and (iv) before the first global buffer provides data, synchronizing the first global buffer between the plurality of stream processors.

According to another embodiment, the computer-implemented method for image processing on a multi-core processor system may comprise alternating accessing modes of the first global buffer and the second global buffer. The accessing modes may alternate in response to starting a next iteration of the processing steps defined in the kernel in the iterative manner. A next iteration may be an iteration subsequent to a current iteration that is concurrently executed by threads of the multi-core processor system. While the first global buffer provides data, the second global buffer may not read or provide data, but instead may only be allowed to write or receive data, while concurrently executing threads of the kernel are iteratively performed. Alternatively, the accessing modes may also alternate within a single iteration. For example, the accessing modes of the first global buffer and second global buffer may alternate in response to a global device synchronization called in the kernel. The global device synchronization may cause the multi-core processor system to synchronize the contents of the global buffers among the plurality of stream processors. The global device synchronization of the multi-core processor system may be called in preparation to alternating the accessing modes.

According to another embodiment, the computer-implemented method may comprise alternatingly writing a result of a processing step to the first global buffer and the second global buffer. In other words, when the first global buffer receives data in a current iteration of the kernel, in the subsequent iteration the first global buffer provides data. Conversely, the second global buffer which provides data in the current iteration of the kernel, may then receive data in the subsequent iteration. The global buffers may swap or alternate the accessing modes with every subsequent iteration of the processing steps defined in the kernel.

According to another embodiment, a computer program or a computer-readable medium comprising instructions, which when executed by a processor of a computer, cause the computer to carry out the above computer-implemented method, is provided.

According to another embodiment, an embedded processor configured to control an actuator of an imaging device, such as a microscope or an endoscope, and comprising a multi-core processor system according to any one of the embodiments above, is provided.

According to another embodiment, the embedded processor is further configured to control a focusing stage, a light source, or an electrical imaging device of the imaging device, is provided.

According to another embodiment, a digital imaging system suitable for an imaging device, such as a microscope or an endoscope, comprising optical and/or mechanical components and an embedded processor according to any one of the embodiments described above, is provided.

According to another embodiment an embedded processor of an imaging device such as a microscope or an endoscope, the embedded processor controlling operation of an actuator of the imaging device, is used as a multi-core processor system according to any one of the embodiments defined above concerning the multi-core processor system.

Next, an embodiment is further described by way of example only using a sample embodiment, which is also shown in the drawings. In the drawings, the same reference numerals are used for features which correspond to each other with respect to at least one of function and design.

The combination of features shown in the enclosed embodiment is for explanatory purposes only and can be modified. For example, a feature of the embodiment having a technical effect that is not needed for a specific application may be omitted. Likewise, a feature which is not shown to be part of the embodiment may be added if the technical effect associated with this feature is needed for a particular application.

### Short description of the figures

- Fig. 1: shows a schematic representation of an embodiment of a multi-core processor system;
- Fig. 2: shows a flow diagram representing a flow of data within a multi-core processor system according to an embodiment;
- Fig. 3: illustrates a digital image, such as a raster image;
- Fig. 4: shows a detailed view of Fig. 1;
- Fig. 5: shows a schematic representation of an embedded processor coupled to a imaging device according to an embodiment;
- Fig. 6: shows a schematic representation of a digital imaging system according to an embodiment;
- Fig. 7: illustrates a flow diagram of a computer-implemented method according to an embodiment; and
- Fig. 8: shows a schematic illustration of a system according to an embodiment.

### Detailed description

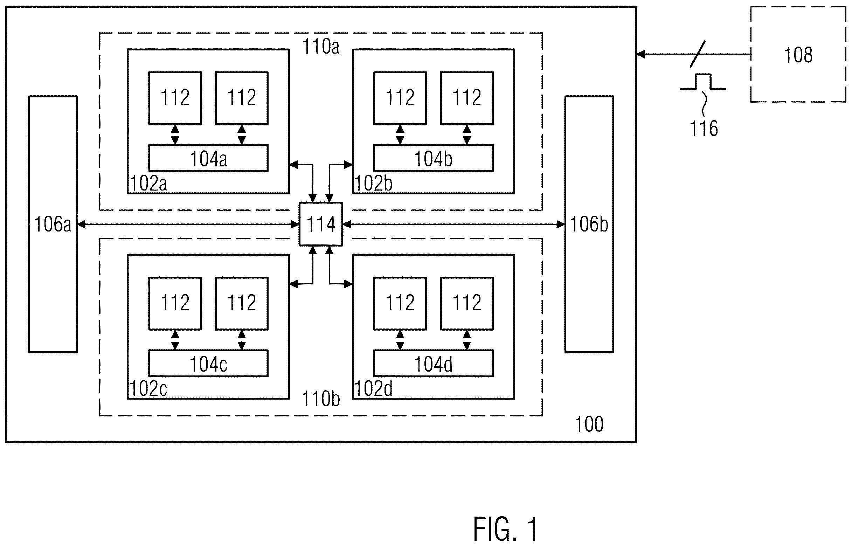

Fig. 1 shows schematic representation of an embodiment of a multi-core processor system 100. The multi-core processor system 100 includes a plurality of stream processors. The stream processors 102a, 102b, 102c, 102d may facilitate the stream processing of data by the multi-core processor system. A graphics processing unit (GPU) typically provides a plurality stream processors. A stream processor may also be known as a stream multiprocessor. The Cell multi-core microprocessor microarchitecture is another architecture that provides stream processors. Each stream processor 102a, 102b, 102c, 102d includes a respective shared memory 104a, 104b, 104c, 104d. Each respective shared memory 104a, 104b, 104c, 104d may be locally accessible within the respective stream processor. According to an embodiment, the shared memory 104a of a respective stream processor 102a is accessible only within the respective stream processor 102a. For example, stream processor 102b may only access data in its shared memory 104b, and stream processor 102c may only access data in its shared memory 104c, etc. In other words, stream processor 102c, for example, cannot directly access data in the shared memory 104b of the other stream processor 102b, but may directly access data in its shared memory 104c.

The multi-core processor system 100 may further include a plurality of global buffers, such as a first global buffer 106a and a second global buffer 106b. Each stream processor 102a, 102b, 102c, 102d may access each of the global buffers. In particular, each stream processor 102a, 102b, 102c, 102d may concurrently access each of the global buffers. In other words, each global buffer, such as first global buffer 106a and second global buffer 106b, is accessible to the plurality of stream processors. When a global buffer provides data, an accessing mode of the buffer may be or may comprise a read-mode or a read-only mode. Conversely, when a global buffer receives data, the accessing mode of the buffer may be or may comprise a write-mode or a write-only mode.

Further, the multi-core processor system 100 may be further configured to distribute a kernel 116 to the plurality of stream processors. The kernel 116 represents a compute kernel. The kernel may be distributed for concurrently executing a plurality of threads of the kernel by each stream processor 102a, 102b, 102c, 102d. Each stream processor may concurrently execute a plurality of threads of the kernel.

The multi-core processor system 100 may further comprise a plurality of processing elements 112. Each stream processor may include a plurality of processing elements 112. A processing element may be or comprise a floating-point unit, an integer processing unit, a special instruction unit, and/or any othertype of execution unit. The processing elements of a respective stream processor may directly access the shared memory included in the respective stream processor. For example, the processing elements 112 included in stream processor 102a may directly access the shared memory 104a of the respective stream processor 102a.

The kernel 116 may define processing steps of a signal processing routine. In particular, the signal processing routine may be or comprise an image processing routine for an initial input image. The kernel 116 may define the processing steps of the signal processing routine in an iterative manner. Optionally, the kernel 116 may further define additional processing steps of the signal processing routine in a non-iterative manner. These additional processing steps may be executed before and/or after the processing steps defined in the iterative manner. The processing steps defined in the iterative manner represent code instructions that should be repeated in an iteration, for example in a while-loop and/or for-loop. Each repetition of the code instructions may represent a single iteration.

The multi-core processor system 100 is further configured to iteratively perform the processing steps, while each thread of the kernel is concurrently executed by the plurality of stream processors. The processing elements of each stream processor may execute threads of the kernel. These threads may execute in parallel in each of the stream processors. In a stream processor executes threads of a kernel, the threads are called active threads.

The processing steps defined by the kernel may comprise deriving intermediary input image data from the initial input image. In a first iteration, the intermediary input image data may be obtained by processing or pre-processing the initial input image.

The processing steps defined by the kernel may further comprise computing a forward transform of the intermediary input image data. As a result of computing the forward transform, forward transform data may be obtained. The first global buffer of the multi-core processor system 100 may be configured to provide the intermediary input image data. In particular, the intermediary input image data may be provided to the stream processor associated with the active thread of the kernel.

The shared memory of the stream processor associated with the active thread of the kernel may be configured to receive the forward transformed data resulting from the forward transform.

The processing steps defined by the kernel may further comprise processing the forward transformed data to obtain process data. The shared memory of the stream processor associated with the active thread of the kernel may be configured to provide forward transformed data and to receive the process data from processing the forward transformed data.

The processing steps defined by the kernel may further comprise computing a backward transform from the processed data to obtain backward transformed data. The second global buffer of the multi-core processor system 100 may be configured to receive the backward transformed data. The shared memory of the stream processor associated with the active thread of the kernel may be configured to provide the processed data.

Processing steps defined by the kernel may further comprise synchronizing the first global buffer between the plurality of stream processors, before the first global buffer provides its data, such as the intermediary input image data, to each stream processor associated with the active thread of the kernel.

The multi-core processor system 100 may further comprise a controller 114, such as a memory controller and/or scheduler that is adapted to distribute data among the plurality of stream processors. The controller 114 may receive the kernel 116 from a host 108 and distribute the kernel to the stream processors. The multi-core processor system may receive a designation of a grouping of its stream processors along with the kernel. The multicore processor system 100 may partition the plurality of stream processors into groups according to the received designation of the grouping. Each group may have the same size, and the group size of each group is at least larger than 1. The groups may represent co-operative groups.

According to an embodiment, the kernel distributed to the multi-core processor system may further represent a co-operative (compute) kernel. Such a kernel may be launched as a co-operative kernel. A co-operative kernel may use co-operative groups.

The multi-core processor system 100 may further be configured to synchronize the global buffers, such as the first global buffer and/or the second global buffer, without providing data to the host 108. The controller 114 may distribute the contents of the global buffers to each stream processor that is associated with the active thread of the kernel.

The multi-core processor system 100 may execute a plurality of threads of the compute kernel 116 concurrently on the plurality of processor. In the following, the data flow of the processing steps defined in a compute kernel 116, as described above, is discussed with respect to a single stream processor, such as stream processor 102a, of the multi-core processor system 100.

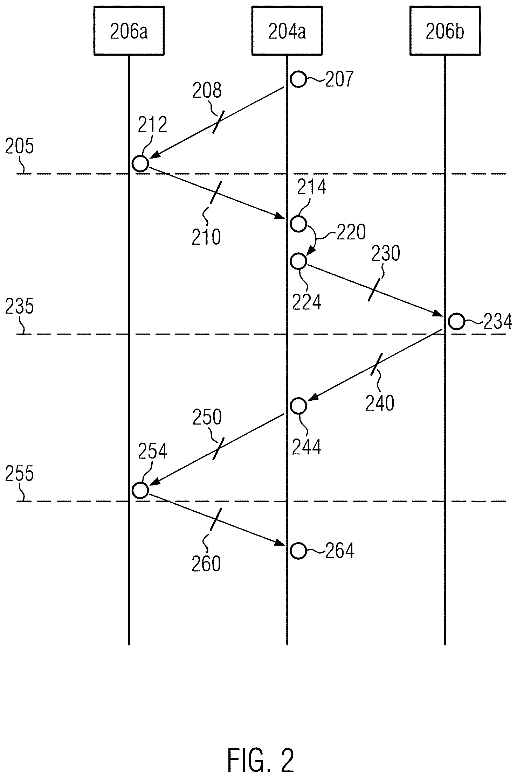

Fig. 2 shows a flow diagram representing a flow of data within a multi-core processor system, particularly stream processor 102a, according to an embodiment. At the same time, fig. 2 illustrates a flow diagram representing a computer-implemented method for signal processing, and in particular image processing.

### The vertical line 204a represents the shared memory 104a of the stream processor 102a

The vertical line 206a represents the first global buffer 106a of the multi-core processor system 100.

The vertical line 206b represents the second global buffer 106a of the multi-core processor system 100.

The circles right next to the vertical line represent the content of the shared memory 204a, first global buffer 206a, and second global buffer 206b, respectively.

For example, circle 207 represents data of an initial input image (or briefly the initial image) that is processed by the computer-implemented method. The initial input image may be stored in the shared memory 204a.

The arrows 208, 210, 220, 230, 240, 250, 260, and 270 each represent one or more of the processing steps of a signal processing routine, such as an image processing routine, defined in a kernel. The each dashed horizontal line 205, 235, and 255 represents one or more of processing step of the signal processing routine. In particular, the processing steps represented by the dashed horizontal lines include a synchronizing of the global buffers between the plurality of stream processors.

In processing step 208, an initial input image 207 (or a portion of the initial input image designated to the stream processor associated with the active thread) is received from the shared memory 204a and may be pre-processed to obtain intermediary input image data 212. The intermediary input image data may be stored in or received by the first global buffer 206a. In step 210, a forward transform of the intermediary input image data 212 may be computed to obtain forward transformed data 214, wherein the first global buffer 206a provides the intermediary input image data 212. The forward transformed data 214 may be stored in or received by the shared memory 204a. Before computing the forward transform, in step 205, the global buffers, such as buffers 206a and 206b, of the multi-core processor system 100 may be synchronized between the plurality of stream processors.

In step 220, the forward transformed data 214 may be processed to obtain process data 224, wherein the shared memory provides forward transformed data 214 and at the same time receives or stores the process data 224. Such a processing is also known as in-place execution or update. In step 230, a backward transformed of the processed data may be computed, wherein the second global buffer 206b receives a backward transformed data 234. The shared memory 204a may provide the process data for computing backward transform. In step 235, the global buffers of the multi-core processor system 100 may be synchronized between the plurality of stream processors, before the contents of the second global buffer 206b are accessed for reading. In step 240, an update of the backward transformed data 234 may be computed, wherein the second global buffer 206b provides the backward transformed data 234, to obtain an updated initial input image 244 that is stored in or received by the shared memory 204a. The computing of the update may comprise computing another backward transform and/or linear image processing operations such as scaling, background removal subtractions) and/or operations. In step 250, the updated initial input image 244 may be pre-processed in an analogous manner as in step 208 to result in intermediary input image data 254 of a next iteration, wherein the shared memory provides the updated initial input image 244. Similarly, the intermediary input image data 254 may be received or stored in the first global buffer 206a. Prior to accessing data in the first global buffer 206a, a synchronization of the global buffers between the plurality of stream processors may be performed. After the synchronization, in step 260, a forward transform of the intermediary input image data 254 of the next iteration may be computed, wherein the resulting forward transformed data 264 of the next iteration is stored in the shared memory 204a.

The above described computations, such as the pre-processing, updating of the initial input image, computing of the forward transform, computing of the backward transform, processing of the intermediary input image data, may be performed by the processing elements 112 of the stream processor associated with the active thread. In the above example of this would be stream processor 102a.

The above described computer-implemented method may further comprise alternating accessing modes of the global buffers of the multi-core processor system iteration-wise, i.e. with every subsequent iteration the accessing modes of the global buffers may be exchanged. Alternatively or additionally, the accessing modes of the global buffers may alternate or may be exchanged within a single iteration. As indicated above, typical accessing modes comprise a read-mode, such as an exclusive read access, and a write-mode, such as, an exclusive write access. In preparation to alternating the accessing modes of the global buffers, a global device synchronization of the global buffers may be performed. The synchronization in steps 205, 235, and 255 may be or comprise said global device synchronization.

In the following the properties of a digital image are described.

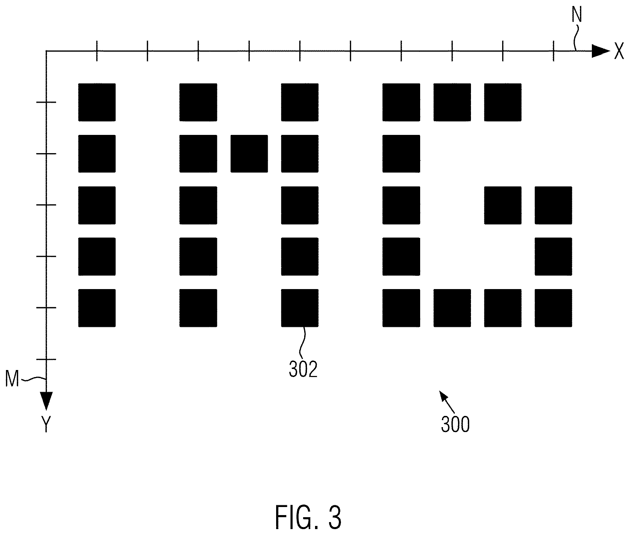

Fig. 3 illustrates a digital image. The (digital) image 300 represents a raster graphic. A raster graphic (also known as raster image) represents the 2-dimensional image as a rectangular matrix or grid of square pixels. A raster image may be stored within an image file, such as a bitmap or png file. A raster image 300 may comprise one or more pixels 302. A size of the raster image is given by the number of pixels along a first dimension axis X times the number of pixels M along a second dimension axis Y. Typically, the first dimension axis may be also called a first image dimension of the image, and the second dimension axis may be denoted as a second image dimension of the image.

A color may be assigned to each pixel of the raster image 300. Alternatively, a digital image may comprise multiple layers of raster images, wherein the pixels of one layer are all assigned to the same color, such as red, green, or blue. In this case, the resulting colorization of the image may be created by mixing the different color components of the multiple layers.

In the following, the process of distributing a kernel to the plurality of stream processors is illustrated.

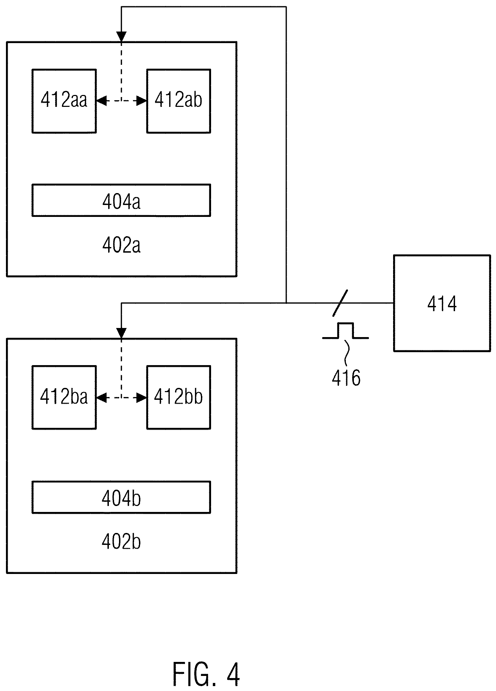

Fig. 4 illustrates a detailed view of two stream processors and a controller according to a multi-core processor system 100. The process of distributing a compute kernel 416 to two stream processors 402a and 402b of the multi-core processor system 100 is illustrated in the following.

Stream processor 402a may be identical or corresponds to stream processor 102a in Fig. 1, and may include a shared memory 404a and a plurality of processing elements. In Fig. 4, stream processor 402a includes processing elements 412aa and processing element 412ab. Stream processor 402b may be identical to or corresponds to stream processor 102b in Fig. 1, and may include a shared memory 404b and a plurality of processing elements. In Fig. 4, stream processor 402b includes processing elements 412ba and processing element 412bb. The controller 414, which corresponds to controller 114 of fig. 1, in the multi-core processor system 100 may distribute the kernel 416 to each one of the stream processors 402a and 402b. The controller 414 may use an indication received along with the compute kernel 416 to determine to which stream processor the kernel is to be distributed. In response to receiving the kernel 416, the stream processor may execute the instructions or processing step that are defined in the kernel 416. The stream processor may then start threads of the kernel 416 at its processing element. Stream processor may concurrently execute multiple threads by its processing elements.

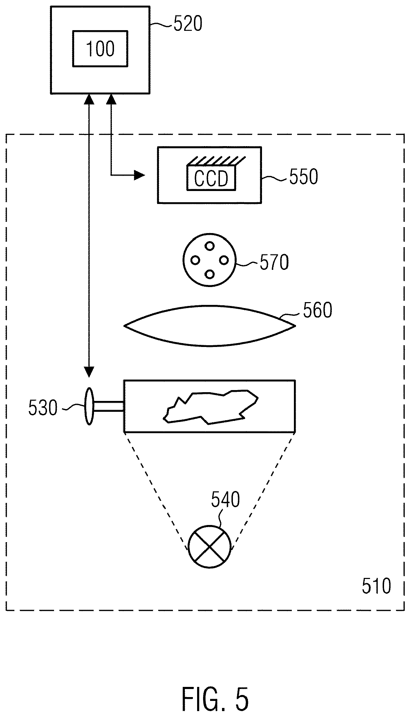

Fig. 5 illustrates this schematic representation of an embedded processor 520 couple to an imaging device 510, which is configured to control an actuator 530, 570 of the imaging device 510.

The embedded processor 520 may include the multi-core processor system 100 according to the embodiment described above.

The imaging device 510 may also comprise an optical component, such as a lens 560, and may be a medical imaging device, such as microscope or an endoscope. The imaging device 510 may further comprise a light source 540 which may illuminate a sample The imaging device 510 may further comprise an electrical imaging device 550, such as a CCD or CMOS sensor. The sensor 550 may generate data for a raster image. The imaging device 510 may comprise one or more actuators 530 and 570. An example of an actuator is a (motorized) focusing stage 530 and a motorized color filter wheel 570.

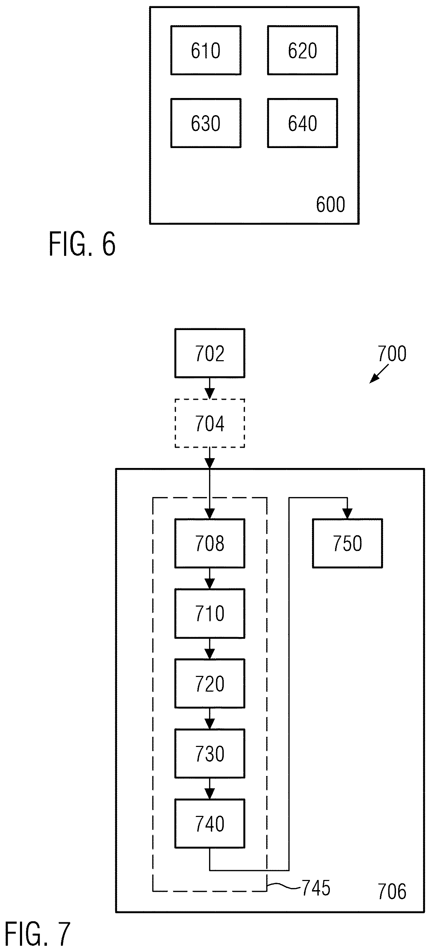

Fig. 6 shows a schematic representation of a digital imaging system according to an embodiment. The digital imaging system 600 may comprise an imaging device 610, which may be implemented as the imaging device 510. The digital imaging system 600 may further include an embedded processor 620, which may correspond to the embedded processor 520 described above. Alternatively, the embedded processor 620 may be implemented as the multi-core processor system 100 alone. The digital imaging system 600 may further comprise mechanical components 630. Examples of mechanical components are a color filter wheel, such as filter color filter wheel 570 or the focusing stage 530. The digital imaging system 600 may further comprise optical components 640. Examples of optical components are the light source 540 or the lens 560.

Fig. 7 illustrates a flow diagram of a computer-implemented method 700 according to an embodiment. The computer-implemented method 700 may be used for image processing on a multi-core processor system 100. The method 700 may comprise, in step 702, distributing a kernel to a plurality of stream processors for concurrently executing a plurality of threads of the kernel by each stream processor. The kernel may define processing steps of signal processing routine or image processing routine in an iterative manner.

Optionally, in step 704, the method may further comprise performing additional processing step in a non-iterative manner. These additional processing steps may for example comprise downscaling of an initial input image or initial image data.

In step 706, the method may further comprise performing the processing steps defined within the kernel. In steps 708 to 740, a first iteration of the processing steps defined within the kernel may be performed, while each thread of the kernel is concurrently executed by each stream processor.

In step 708, the method may comprise pre-processing an initial input image to obtain intermediary input image data. The initial input image may be obtained from step 704 in which an original image was processed in a non-iterative manner. Alternatively, the initial input image may be received from the host and/or an imaging device.

In step 710, the method may further comprise computing a forward transform of the intermediary input image data to obtain forward transformed data.

In step 720, the method may further comprise processing the forward transformed data to obtain processed data.

In step 730, the method may further comprise computing a backward transform of the processed data to obtain backward transformed data.

In step 740, the method may further comprise computing per-iteration update of the backward transformed data to obtain an updated initial input image.

The dashed lines 745 indicate the processing steps that belong together to a single iteration of the processing steps defined in the iterative manner.

In step 750, a next iteration of the processing steps defined in the iterative manner may start. Thus, in step 750, the method may comprise pre-processing the updated initial input image to obtain intermediary input image data of a next iteration. The computer-implemented method 700 may further comprise alternating accessing modes of the global buffers of the multi-core processor system. The accessing modes of the global buffers may alternate iteration-wise, i.e. with every subsequent iteration the accessing modes of the global buffers may be exchanged. Alternatively or additionally, the accessing modes of the global buffers may alternate within a single iteration. As indicated above, typical accessing modes comprise a read-mode, such as an exclusive read access, and a write-mode, such as, an exclusive write access. In preparation to alternating the accessing modes of the global buffers, a global device synchronization of the global buffers may be performed.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

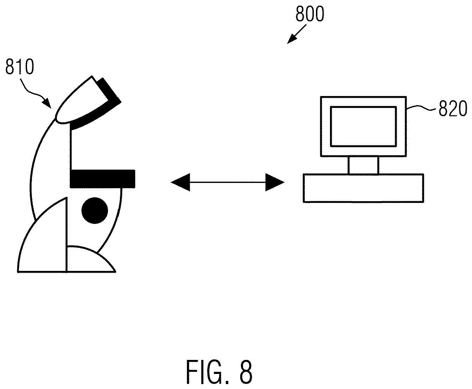

Some embodiments relate to a microscope comprising a system as described in connection with one or more of the Figs. 1 to 7. Alternatively, a microscope may be part of or connected to a system as described in connection with one or more of the Figs. 1 to 7. Fig. 8 shows a schematic illustration of a system 800 configured to perform a method described herein. The system 800 comprises a microscope 810 and a computer system 820. The microscope 810 is configured to take images and is connected to the computer system 820. The computer system 820 is configured to execute at least a part of a method described herein. The computer system 820 may be configured to execute a machine learning algorithm. The computer system 820 and microscope 810 may be separate entities but can also be integrated together in one common housing. The computer system 820 may be part of a central processing system of the microscope 810 and/or the computer system 820 may be part of a subcomponent of the microscope 810, such as a sensor, an actor, a camera or an illumination unit, etc. of the microscope 810.

The computer system 820 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 820 may comprise any circuit or combination of circuits. In one embodiment, the computer system 820 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 820 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 820 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 820 may also include a display device, one or more speakers, and a keyboard and/or controller, which can include a mouse, trackball, touch screen, voice-recognition device, or any other device that permits a system user to input information into and receive information from the computer system 820.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### LIST OF REFERENCE SIGNS

- 100: multi-core processor system
- 102a, 102b, 102c, 102d: stream processor
- 104a, 104b, 104c, 104d: shared memory
- 106a: first global buffer
- 106b: second global buffer
- 108: host
- 110a,: group of stream processors
- 110b: group of stream processors
- 112: processing element
- 114: controller
- 116,416: kernel
- 204a: shared memory
- 205: synchronizing
- 206a: first global buffer
- 206b: second global buffer
- 207: initial input image
- 208: pre-processing of initial input image
- 210: computing a forward transform
- 212: intermediary input image data
- 214: forward transformed data
- 220: processing of the forward transformed data
- 224: processed data
- 230: computing a backward transform
- 234: backward transformed data
- 235: synchronizing
- 240: computing a per-iteration update
- 244: updated initial input image
- 250: pre-processing of the update initial input image
- 254: intermediary input image data of a next iteration
- 260: computing a forward transform in a next iteration
- 264: resulting forward transformed data of a next iteration
- 300: raster image
- 302: pixel
- X: first image dimension
- Y: second image dimension
- M: number of pixels
- N: number of pixels
- 402a: stream processor
- 404a, 404b: shared memory
- 412aa, 412ab: processing element
- 412ba, 412bb: processing element
- 414: controller
- 416: kernel
- 510: imaging device
- 520: embedded processor
- 530: focusing stage, actuator
- 540: light source
- 550: electrical imaging device
- 560: lens
- 570: motorized color filter wheel
- 600: digital imaging system
- 610: imaging device
- 620: embedded processor
- 630: mechanical component
- 640: optical component
- 700: computer-implemented method
- 702: distributing a kernel
- 704: performing additional processing steps
- 706: performing the processing steps defined in the kernel
- 708: pre-processing an initial input image
- 710: computing a forward transform
- 720: processing the forward transformed data
- 730: computing a backward transform
- 740: computing per-iteration update
- 750: pre-processing the updated initial input image
- 800: system
- 810: microscope
- 820: computer system

## Claims

1. A multi-core processor system (100) comprising:
a plurality of stream processors, each stream processor (102a, 102b, 102c, 102d) having a shared memory (104a, 104b, 104c, 104d) that is locally accessible within the stream processor (102a, 102b, 102c, 102d);
a first global buffer (106a) and a second global buffer (106b), wherein each global buffer (106a, 106b) is accessible to the plurality of stream processors; and
wherein the multi-core processor system (100) is further configured to:
distribute a kernel (116) to the plurality of stream processors for concurrently executing a plurality of threads of the kernel (116) by each stream processor (102a, 102b, 102c, 102d), the kernel (116) defining processing steps of an image processing routine in an iterative manner;
while each thread of the kernel (116) is concurrently executed, iteratively perform the processing steps defined within the kernel (116) that was distributed to each of the stream processors (102a, 102b, 102c, 102d),
the processing steps of the image processing routine comprising:
(i) computing (210) a forward transform of intermediary input image data (212) to obtain forward transformed data (214), wherein the first global buffer (106a) is configured to provide the intermediary input image data (212), and wherein the shared memory (104a, 104b, 104c, 104d) is configured to receive the forward transformed data (214) resulting from the forward transform;
(ii) processing (220) the forward transformed data (214) to obtain processed data (224), wherein the shared memory (104a, 104b, 104c, 104d) is configured to receive the processed data (224);
(iii) computing (230) a backward transform of the processed data (224) to obtain backward transformed data (234), wherein the second global buffer (106b) is configured to receive the backward transformed data (234); and
(iv) before the first global buffer (106a) provides the intermediary input image data, synchronizing (205, 255) the first global buffer (106a) between the plurality of stream processors.

2. The multi-core processor system (100) according to claim 1, the processing steps further comprising:
pre-processing (208) an initial input image (207) to obtain the intermediary input image data (212), wherein the shared memory (104a, 104b, 104c, 104d) is configured to provide the initial input image (207), and wherein the first global buffer (106a) is configured to receive the intermediary input image data (212).

3. The multi-core processor system (100) according to claim 1 or 2, the processing steps further comprising:
in response to the computing (230) of the backward transform, synchronizing (235) the second global buffer between the plurality of stream processors; and
computing (240) a per-iteration update of the backward transformed data (234) to obtain an updated initial input image (244), wherein the shared memory (104a, 104b, 104c, 104d) is configured to receive the updated initial input image (244), and wherein the second global buffer (106b) is configured to provide the backward transformed data (234).

4. The multi-core processor system (100) according to claim 2 or 3,
wherein the pre-processing (208) comprises computing the forward transform along a first image dimension (X) of the initial input image (207), and
wherein the forward transform of the intermediary input image data (212) is computed along a second image dimension (Y) of the initial input image, the second image dimension (Y) being different from the first image dimension (X).

5. The multi-core processor system (100) according to any one of claims 1 to 4, wherein the processing steps of the image processing routine for an initial input image represent a portion of at least one of the following:
performing a Richardson-Lucy deconvolution associated with the initial input image;
performing a deconvolution operation associated with the initial input image;
determining a point spread function associated with the initial input image;
de-blurring the initial input image; and
blurring the initial input image.

6. The multi-core processor system (100) according to any one of claim 1 to 5, wherein at least one of the computing of the forward transform, the processing of the forward transformed data, and the computing of the backward transform represent a linear image processing operation; or
wherein at least one of the computing of the forward transform, the processing of the forward transformed data, and the computing of the backward transform represent a non-linear image processing operation.

7. The multi-core processor system (100) according to any one of the previous claims, wherein the forward transform comprises a Fast Fourier Transform, and wherein the backward transform is an inverse function to the forward transform.

8. The multi-core processor system (100) according to any one of the previous claims, wherein the kernel (116) that is distributed to the plurality of stream processors represents a cooperative kernel.

9. The multi-core processor system (100) according to any one of the previous claims, further configured to:
receive the kernel (116) defining the processing steps of the image processing routine from a host (108), and
synchronize (205, 255) the first global buffer (106a) without providing data from the first global buffer (106a) to the host (108).

10. A computer-implemented method for image processing on a multi-core processor system (100), the computer-implemented method comprising steps of:
distributing a kernel (116) to a plurality of stream processors for concurrently executing a plurality of threads of the kernel (116) by each stream processor (102a, 102b, 102c, 102d), the kernel (116) defining processing steps of an image processing routine in an iterative manner;
while each thread of the kernel (116) is concurrently executed by each stream processor (102a, 102b, 102c, 102d), iteratively performing the processing steps defined within the kernel (116) that was distributed to each of the stream processor (102a, 102b, 102c, 102d), wherein each stream processor (102a, 102b, 102c, 102d) has a shared memory (104a, 104b, 104c, 104d) locally accessible within the stream processor (102a, 102b, 102c, 102d), and wherein a first global buffer (106a) of the multi-core processor system (100) and a second global buffer (106b) of the multi-core processor system (100) is each accessible to the plurality of stream processors,
the processing steps of the image processing routine comprising:
(i) computing (210) a forward transform of intermediary input image data to obtain forward transformed data, wherein the first global buffer (106a) provides the intermediary input image data, and wherein the shared memory receives the forward transformed data resulting from the forward transform;
(ii) processing (220) the forward transformed data to obtain processed data, wherein the shared memory receives the processed data;
(iii) computing (230) a backward transform of the processed data to obtain backward transformed data, wherein the second global buffer (106b) receives the backward transformed data; and
(iv) before the first global buffer (106a) provides intermediary input image data, synchronizing (205, 255) the first global buffer (106a) between the plurality of stream processors.

11. A computer program or a computer-readable medium comprising instructions, which when executed by a processor of a computer, cause the computer to carry out the computer-implemented method of claim 10.

12. An embedded processor (520) configured to control an actuator (530, 570) of an imaging device (510), such as a microscope or an endoscope, and comprising a multi-core processor system (100) according to any one of claims 1 to 9.

13. The embedded processor (520) according to claim 12, further configured to control a focusing stage (530), a light source (540), or an electrical imaging device (550) of the imaging device.

14. A digital imaging system (600) suitable for an imaging device (610), such as a microscope or an endoscope, comprising optical (640) and/or mechanical components (630) and an embedded processor (620) according to claim 12 or 13.

15. Use of an embedded processor of an imaging device such as a microscope or an endoscope, the embedded processor controlling an operation of an actuator of the imaging device, as a multi-core processor system (100) according to any one of claims 1 to 9.
